# EUROPEAN PATENT APPLICATION

(11) **EP 4 428 507 A1**
(43) Date of publication of application: **11.09.2024**
(21) Application number: 24161950.1
(22) Date of filing: 07.03.2024
(51) Int. Cl.: G01J 3/06, G01J 3/50, H04N 1/04, H04N 1/10

(54) **COLOR MEASUREMENT APPARATUS**

(30) Priority: 08.03.2023 JP 2023035339
(71) Applicant: Seiko Epson Corporation, Tokyo 160-8801 (JP)
(72) Inventor: ITO, Masaki, Suwa-shi, 392-8502 (JP); TOKUDA, Takeshi, Suwa-shi, 392-8502 (JP)
(74) Representative: Lewis Silkin LLP

(57) **Abstract**

A color measurement apparatus to which a colorimeter that measures a color of a color measurement target is configured to be attached, includes a support base of the color measurement target, a carriage that supports the colorimeter, a gantry that supports the carriage, a first scanning mechanism that causes the carriage to perform scanning in a first direction on the support base, and a second scanning mechanism that causes the gantry to perform scanning in a second direction, in which the first scanning mechanism includes a first motor that generates a driving force for causing the carriage to perform scanning in the first direction, and a first transmission mechanism portion that transmits the driving force from the first motor to the carriage, and the first motor overlaps the gantry in a third direction.

## Description

The present application is based on, and claims priority from JP Application Serial Number 2023-035339, filed March 8, 2023, the disclosure of which is hereby incorporated by reference herein in its entirety.

### BACKGROUND

### 1. Technical Field

The present disclosure relates to a color measurement apparatus.

### 2. Related Art

In the related art, various color measurement apparatuses that measure a color of a color measurement target are used. For example, JP-A-8-327455 discloses an automatic XY colorimeter including a color density sensor mounted on a movable head, a movable head Y-direction drive unit that drives the movable head, and a movable head X direction drive unit.

JP-A-8-327455 discloses an electric motor and a string body or the like such as an endless-shaped chain or timing belt or a wire, as a mechanism that moves the movable head in the Y direction. In addition, the electric motor and the string body or the like such as an endless-shaped chain or timing belt or a wire is disclosed as a mechanism that moves the movable head in the X direction. However, depending on the disposition of the mechanism that operates a color measurement portion, there is a concern that an apparatus becomes large. Although the automatic XY colorimeter of JP-A-8-327455 does not disclose a mechanism that moves the movable head in a height direction, which is the direction intersecting the X direction and the Y direction, there is a concern that the size of the apparatus further increases when the mechanism that moves the movable head in the height direction is provided.

### SUMMARY

According to an aspect of the present disclosure, there is provided a color measurement apparatus to which a colorimeter that measures a color of a color measurement target is configured to be attached, including a support base that supports the color measurement target, a carriage that supports the colorimeter, a gantry that supports the carriage, a first scanning mechanism that causes the carriage to perform scanning in a first direction on the support base, and a second scanning mechanism that causes the gantry to perform scanning in a second direction intersecting the first direction, in which the first scanning mechanism includes a first motor that generates a driving force for causing the carriage to perform scanning in the first direction, and a first transmission mechanism portion that transmits the driving force from the first motor to the carriage, and the first motor overlaps the gantry in a third direction intersecting the first direction and the second direction.

According to another aspect of the present disclosure, there is provided a color measurement apparatus to which a colorimeter that measures a color of a color measurement target is configured to be attached, including a support base that supports the color measurement target, a carriage that supports the colorimeter, a gantry that supports the carriage, a first scanning mechanism that causes the carriage to perform scanning in a first direction on the support base, and a second scanning mechanism that causes the gantry to perform scanning in a second direction intersecting the first direction, in which the second scanning mechanism includes a second motor that generates a driving force for displacing the gantry in the second direction in a main body portion having the support base, and a second transmission mechanism that has a belt that transmits the driving force from the second motor to the gantry, and the second motor is provided on a center side of the main body portion with respect to the belt when viewed from a third direction intersecting the first direction and the second direction.

According to still another aspect of the present disclosure, there is provided a color measurement apparatus including a support base that supports a color measurement target, a color measurement portion that measures a color of the color measurement target, a carriage that supports the color measurement portion, a gantry that supports the carriage, a first scanning mechanism that causes the carriage to perform scanning in a first direction on the support base, and a second scanning mechanism that causes the gantry to perform scanning in a second direction intersecting the first direction, in which the first scanning mechanism includes a first motor that generates a driving force for causing the carriage to perform scanning in the first direction, and a first transmission mechanism portion that transmits the driving force from the first motor to the carriage, and the first motor overlaps the gantry in a third direction intersecting the first direction and the second direction.

### BRIEF DESCRIPTION OF THE DRAWINGS

FIG. 1 is a schematic perspective view of a colorimeter that can be used in a color measurement apparatus according to an example of the present disclosure.
FIG. 2 is a perspective view of the color measurement apparatus according to the example of the present disclosure, and is a view illustrating a state in which a color chart is supported by a support base.
FIG. 3 is a perspective view of the color measurement apparatus according to the example of the present disclosure, and is a view when viewed from an angle different from FIG. 2.
FIG. 4 is a plan view of the color measurement apparatus according to the example of the present disclosure, and is a view illustrating an internal configuration of a gantry and illustrating a state in which the color chart is supported by the support base.
FIG. 5 is a perspective view illustrating an internal configuration of the color measurement apparatus according to the example of the present disclosure.
FIG. 6 is a perspective view of the color measurement apparatus according to the example of the present disclosure when viewed from a rear surface side, and is a view illustrating an internal configuration of a main body portion.
FIG. 7 is a side view of the color measurement apparatus according to the example of the present disclosure, and is a view illustrating the internal configuration of the gantry.
FIG. 8 is a front view of a periphery of a carriage of the color measurement apparatus according to the example of the present disclosure, and is a view illustrating the internal configuration of the gantry.
FIG. 9 is a front sectional view of a periphery of the carriage of the color measurement apparatus according to the example of the present disclosure.
FIG. 10 is a front sectional view of the color measurement apparatus according to the example of the present disclosure.
FIG. 11 is a front sectional view of a periphery of a gantry motor of the color measurement apparatus according to the example of the present disclosure.
FIG. 12 is a rear view illustrating a periphery of the carriage of the color measurement apparatus according to the example of the present disclosure, and is a view illustrating a disposition when the colorimeter of FIG. 1 is accommodated and the carriage is caused to perform scanning.
FIG. 13 is a rear view illustrating a periphery of the carriage of the color measurement apparatus according to the example of the present disclosure, and is a view illustrating a disposition at a moment at which the colorimeter of FIG. 1 is accommodated, the carriage is moved downward from the state of FIG. 12, and a color measurement portion comes into contact with a color measurement target.
FIG. 14 is a rear view illustrating a periphery of the carriage of the color measurement apparatus according to the example of the present disclosure, and is a view illustrating a disposition when the colorimeter of FIG. 1 is accommodated, the carriage is further moved downward from the state of FIG. 13, and a color of the color measurement target is measured.
FIG. 15 is a rear view illustrating a periphery of the carriage of the color measurement apparatus according to the example of the present disclosure, and is a view illustrating a disposition when the colorimeter of FIG. 1 is accommodated, the carriage is further moved downward from the state of FIG. 14, and a bottom surface of the carriage comes into contact with the color measurement target.
FIG. 16 is a rear view illustrating a periphery of the carriage of the color measurement apparatus according to the example of the present disclosure, and is a view illustrating a disposition in a state in which the colorimeter of FIG. 1 is accommodated and the carriage is moved to a home position.
FIG. 17 is a perspective view illustrating a periphery of a third direction movement mechanism of the carriage of the color measurement apparatus according to the example of the present disclosure, and is a view illustrating a disposition when a color of the color measurement target is measured.
FIG. 18 is a perspective view illustrating a periphery of the third direction movement mechanism of the carriage of the color measurement apparatus according to the example of the present disclosure, and is a view illustrating a disposition in a state in which the carriage is moved to the home position.
FIG. 19 is a front view of a periphery of the carriage of the color measurement apparatus according to the example of the present disclosure, and is a view illustrating the internal configuration of the gantry and the carriage.
FIG. 20 is a front view of a periphery of the carriage of the color measurement apparatus according to the example of the present disclosure, and is a view illustrating a configuration member different from those in FIGS. 8 and 18 in the internal configuration of the gantry.
FIG. 21 is a front sectional view of a periphery of a carriage slider and a gantry frame of the color measurement apparatus according to the example of the present disclosure.
FIG. 22 is a front sectional view of a periphery of a carriage slider and a gantry frame of a color measurement apparatus according to another example.

### DESCRIPTION OF EMBODIMENTS

Hereinafter, the present disclosure will be schematically described.

A color measurement apparatus according to a first aspect is a color measurement apparatus to which a colorimeter that measures a color of a color measurement target is configured to be attached, including a support base that supports the color measurement target, a carriage that supports the colorimeter, a gantry that supports the carriage, a first scanning mechanism that causes the carriage to perform scanning in a first direction on the support base, and a second scanning mechanism that causes the gantry to perform scanning in a second direction intersecting the first direction, in which the first scanning mechanism includes a first motor that generates a driving force for causing the carriage to perform scanning in the first direction, and a first transmission mechanism portion that transmits the driving force from the first motor to the carriage, and the first motor overlaps the gantry in a third direction intersecting the first direction and the second direction.

According to the present aspect, the first motor overlaps the gantry in the third direction. Therefore, the first scanning mechanism can be configured to be short in the third direction, and as a result, the color measurement apparatus can be miniaturized.

Next, the color measurement apparatus according to a second aspect, which is an aspect involved in the first aspect, further includes an electric substrate that is provided on the carriage and moves in conjunction with the carriage, and a harness member that is disposed along the first direction in the gantry and is coupled to the electric substrate, in which the first motor overlaps an area in which the harness member is disposed in the third direction.

According to the present aspect, the first motor overlaps the area in which the harness member is disposed in the third direction. With such a configuration, the color measurement apparatus can be particularly miniaturized in the third direction.

Next, the color measurement apparatus according to a third aspect is an aspect involved in the first or second aspect, in which a rotation shaft of the first motor is along the third direction, and the first transmission mechanism portion includes a pulley of which a rotation axis is in the third direction, and an endless belt that is hung on the pulley and transmits the driving force.

According to the present aspect, the first transmission mechanism portion includes the pulley that has the third direction as the rotation axis, and the endless belt that is hung on the pulley and transmits the driving force. By configuring the first transmission mechanism portion in this way, the first transmission mechanism portion can be configured to be particularly short in the third direction.

Next, the color measurement apparatus according to a fourth aspect is an aspect involved in any one of the first to third aspects, in which the second scanning mechanism includes a second motor that generates a driving force for displacing the gantry in the second direction in a main body portion having the support base, and a second transmission mechanism having a belt that transmits the driving force from the second motor to the gantry, and the second motor is provided on a center side of the main body portion with respect to the belt when viewed from the third direction.

According to the present aspect, the second motor is provided on the center side of the main body portion with respect to the belt when viewed from the third direction. Therefore, since the second motor does not protrude outward in the main body portion when viewed from the third direction, the main body portion can be miniaturized when viewed from the third direction.

Next, the color measurement apparatus according to a fifth aspect is an aspect involved in the fourth aspect, in which the second motor is provided at a position for overlapping the gantry when viewed from the third direction.

According to the present aspect, the second motor is provided at a position for overlapping the gantry when viewed from the third direction. With such a configuration, the color measurement apparatus can be particularly miniaturized when viewed from the third direction.

Next, the color measurement apparatus according to a sixth aspect is an aspect involved in the fifth aspect, in which the second motor and the second transmission mechanism are provided at positions not protruding from the support base in the third direction.

According to the present aspect, the second motor and the second transmission mechanism are provided at positions not protruding from the support base in the third direction. With such a configuration, the color measurement apparatus can be particularly miniaturized when viewed from the third direction.

Next, the color measurement apparatus according to a seventh aspect, which is an aspect involved in any one of the first to sixth aspects, includes an operation portion that receives an operation instruction, in which the operation portion is provided at a position for overlapping the first motor when viewed from the third direction.

According to the present aspect, the operation portion is provided at the position for overlapping the first motor when viewed from the third direction. With such a configuration, the color measurement apparatus can be particularly miniaturized when viewed from the third direction.

Next, the color measurement apparatus according to an eighth aspect, which is an aspect involved in any one of the first to seventh aspects, includes a third direction movement mechanism that moves the carriage in the third direction with respect to the gantry, in which the third direction movement mechanism has a third motor, which generates a driving force for moving the carriage in the third direction, in the carriage.

According to the present aspect, the third direction movement mechanism has the third motor, which generates a driving force for moving the carriage in the third direction, in the carriage. The gantry can be miniaturized by having the third motor in the carriage.

Next, the color measurement apparatus according to a ninth aspect is an aspect involved in the eighth aspect, in which the third motor is provided at a position overlapping the first motor in the third direction.

According to the present aspect, the third motor is provided at the position overlapping the first motor in the third direction. With such a configuration, the color measurement apparatus can be particularly miniaturized in the third direction.

Next, the color measurement apparatus according to a tenth aspect is an aspect involved in the ninth aspect, in which the third motor is provided at a position overlapping the first motor in the second direction.

According to the present aspect, the third motor is provided at the position overlapping the first motor in the second direction. With such a configuration, the gantry and the carriage in the second direction can be miniaturized, and as a result, the color measurement apparatus can be particularly miniaturized in the second direction.

Next, the color measurement apparatus according to an eleventh aspect is an aspect involved in any one of the eighth to tenth aspects, in which the third direction movement mechanism has a plurality of gears that transmit the driving force of the third motor, and the gears include a worm gear.

According to the present aspect, the third direction movement mechanism has the plurality of gears that transmits the driving force of the third motor, and the gears include the worm gear. With such a configuration, the third direction movement mechanism can be miniaturized.

Next, a color measurement apparatus according to a twelfth aspect, which is a color measurement apparatus to which a colorimeter that measures a color of a color measurement target is configured to be attached, includes a support base that supports the color measurement target, a carriage that supports the colorimeter, a gantry that supports the carriage, a first scanning mechanism that causes the carriage to perform scanning in a first direction on the support base, and a second scanning mechanism that causes the gantry to perform scanning in a second direction intersecting the first direction, in which the second scanning mechanism includes a second motor that generates a driving force for displacing the gantry in the second direction in a main body portion having the support base, and a second transmission mechanism that has a belt that transmits the driving force from the second motor to the gantry, and the second motor is provided on a center side of the main body portion with respect to the belt when viewed from a third direction intersecting the first direction and the second direction.

According to the present aspect, the second motor is provided on the center side of the main body portion with respect to the belt when viewed from the third direction. Therefore, since the second motor does not protrude outward in the main body portion when viewed from the third direction, the main body portion can be miniaturized when viewed from the third direction, and as a result, the color measurement apparatus can be miniaturized.

Next, a color measurement apparatus according to a thirteenth aspect includes a support base that supports a color measurement target, a color measurement portion that measures a color of the color measurement target, a carriage that supports the color measurement portion, a gantry that supports the carriage, a first scanning mechanism that causes the carriage to perform scanning in a first direction on the support base, and a second scanning mechanism that causes the gantry to perform scanning in a second direction intersecting the first direction, in which the first scanning mechanism includes a first motor that generates a driving force for causing the carriage to perform scanning in the first direction, and a first transmission mechanism portion that transmits the driving force from the first motor to the carriage, and the first motor overlaps the gantry in a third direction intersecting the first direction and the second direction.

According to the present aspect, the first motor overlaps the gantry in the third direction. Therefore, the first scanning mechanism can be configured to be short in the third direction, and as a result, the color measurement apparatus can be miniaturized.

Hereinafter, the present disclosure will be specifically described.

An X-Y-Z coordinate system illustrated in each drawing is an orthogonal coordinate system, an X-Y plane is a horizontal plane, and an X-Z plane and a Y-Z plane are vertical planes. Here, a Z-axis direction is a vertical direction and corresponds to a placement direction of a colorimeter 100, a +Z direction is a vertically upward direction, and a -Z direction is a vertically downward direction. In addition, the X-axis direction is a horizontal direction orthogonal to the Z-axis direction that is a vertical direction. In addition, the Y-axis direction is a horizontal direction and is a direction orthogonal to both the X-axis direction and the Z-axis direction. In the following description, the +Y direction side of a color measurement apparatus 1 is referred to as the rear direction side, the -Y direction side of the color measurement apparatus 1 is referred to as the front direction side, the +X direction side of the color measurement apparatus 1 is referred to as the right direction side, and the -X direction side of the color measurement apparatus 1 is referred to as the left direction side.

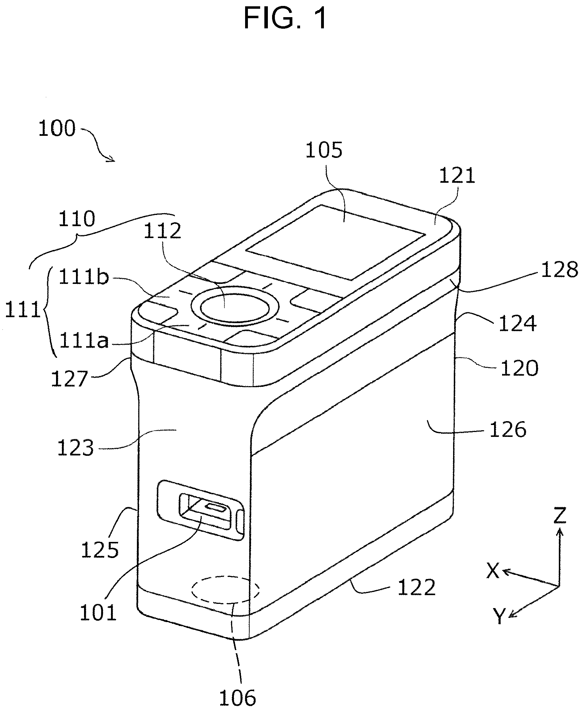

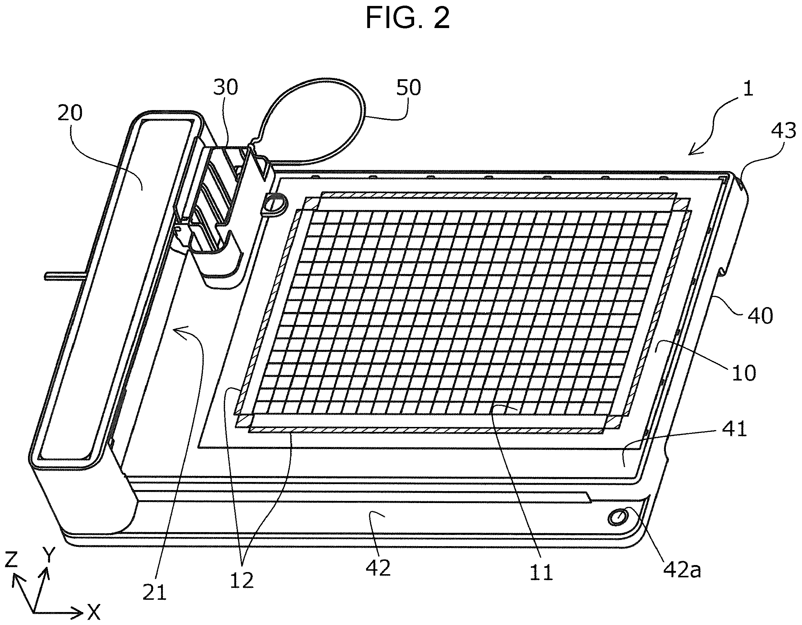

First, with reference to FIG. 1, an example of the colorimeter 100 that can be used in the color measurement apparatus 1 according to an example of the present disclosure will be described. The colorimeter 100 according to the present example includes a color measurement port 106, and is an optical device that emits light in the -Z direction from the color measurement port 106 and performs color measurement by receiving light reflected by a color chart 10, which is a color measurement target, as illustrated in FIG. 2. In other words, the optical axis direction is the Z-axis direction, and the position of the optical axis corresponds to the position of the color measurement port 106.

The colorimeter 100 according to the present example includes a casing 120 having an upper surface 121 that is a surface on the +Z direction side, a color measurement surface 122 that is a bottom surface on the -Z direction side and is provided with the color measurement port 106, a rear surface 123 that is a surface on the +Y direction side, a front surface 124 that is a surface on the -Y direction side, a right surface 125 that is a surface on the +X direction side, and a left surface 126 that is a surface on the -X direction side.

An operation portion 110 and a screen portion 105 are disposed on the upper surface 121 in the Y-axis direction. Specifically, the operation portion 110 is provided on the +Y direction side of the upper surface 121, and the screen portion 105 is provided on the -Y direction side of the upper surface 121. The operation portion 110 includes a plus-shaped button 111 configured with a bar shape 111a extending in the Y-axis direction and a bar shape 111b extending in the X-axis direction, and a determination button 112 provided at the center of the plus-shaped button 111. For example, a user moves the menus to be activated in front/rear and left/right directions by pressing the plus-shaped button 111 with respect to a plurality of menus displayed on the screen portion 105, and can determine the desired menu by pressing the determination button 112.

A terminal 101 to which a USB cable 50 illustrated in FIG. 2 or the like can be coupled is provided on the rear surface 123. In addition, the colorimeter 100 of the present example is provided with a projection portion 127 and a projection portion 128 that are projected toward the outside when viewed in the Y-axis direction. Specifically, the projection portion 127 is provided in an area on the +Z direction side as compared with the center portion of the right surface 125 in the Z-axis direction, and the projection portion 128 is provided in an area on the +Z direction side as compared with the center portion of the left surface 126 in the Z-axis direction.

Next, a detailed configuration of the color measurement apparatus 1 according to the example of the present disclosure will be described with reference to FIGS. 2 to 22. FIGS. 2 to 7 illustrate an overall configuration of the color measurement apparatus 1 of the present example. The color measurement apparatus 1 includes a main body portion 40 having a support base 41 extending in the X-axis direction and the Y-axis direction, and further includes a gantry 20 extending in the Y-axis direction to cover a portion of the support base 41 from the +Z direction side.

A carriage 30 that can accommodate the colorimeter 100 is attached to the gantry 20. The gantry 20 can move in the X-axis direction with respect to the support base 41, and the carriage 30 can move in the Y-axis direction with respect to the gantry 20. These movements are also referred to as scanning. Here, the carriage 30 can move in the Y-axis direction with respect to the gantry 20, and can also move in the Z-axis direction with respect to the gantry 20. One end of the USB cable 50 is coupled to the gantry 20 and the other end of the USB cable 50 is coupled to the colorimeter 100 accommodated in the carriage 30.

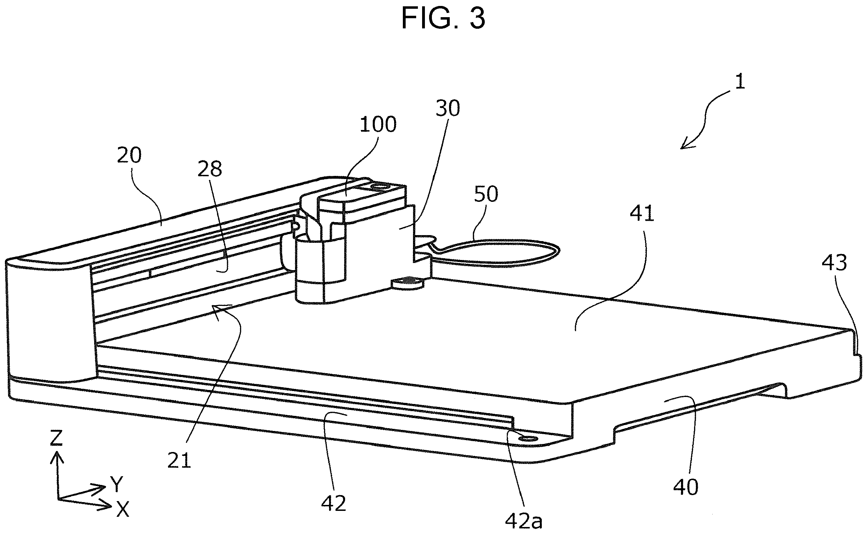

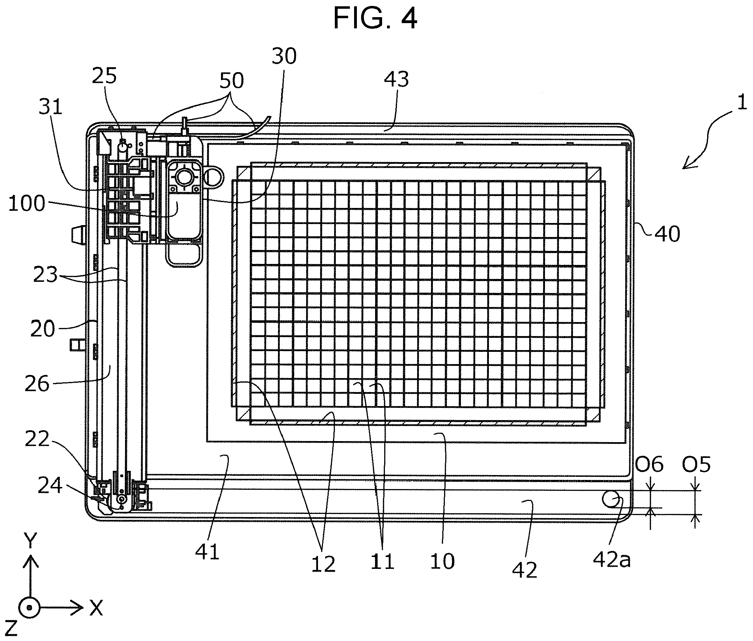

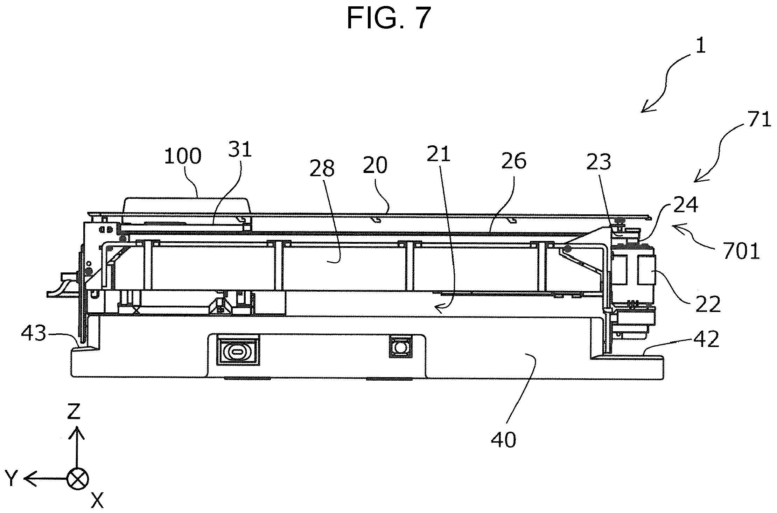

As illustrated in FIGS. 2 and 4, the color chart 10, which is an example of a measurement target, can be placed on the support base 41, and the color chart 10 is composed by, for example, a plurality of color patches 11, a black frame 12, or the like. The color chart 10 is fixed to the support base 41 by, for example, attaching an adhesive tape at a periphery of the color chart 10, and corresponds to automatic color measurement up to A3 size, for example. However, as illustrated in FIGS. 3, 7, or the like, since the gantry 20 has a gate shape when viewed from the X-axis direction and has a space portion 21 corresponding to the gate shape, a long paper that exceeds the A3 size can also be placed on the support base 41 in the X-axis direction.

On the -Y direction side of the main body portion 40, a front surface 42 is provided at a position lower in the -Z direction side than the support base 41, and on the +Y direction side of the main body portion 40, a rear surface 43 is provided at a position lower in the -Z direction side than the support base 41. A power button 42a that is an example of an operation portion of the color measurement apparatus 1 is provided on the front surface 42.

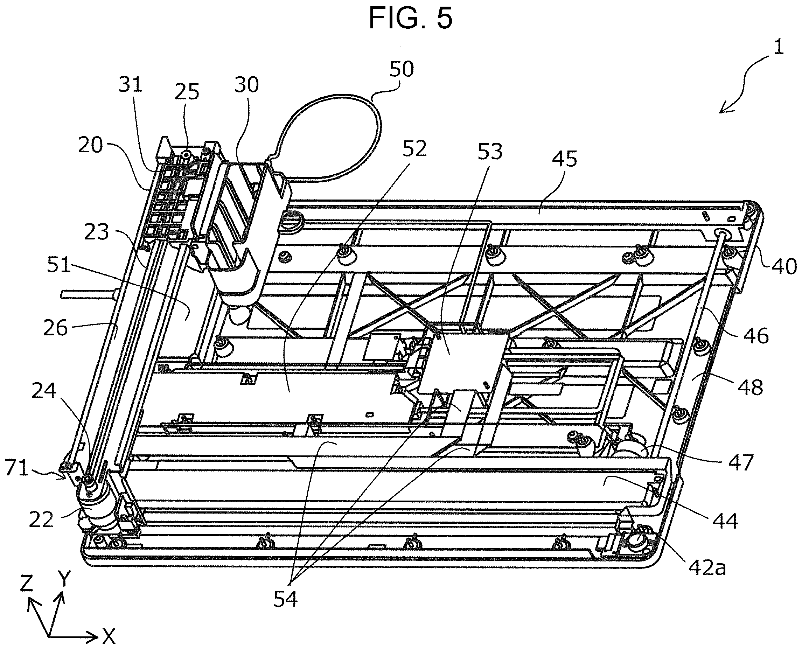

FIG. 5 illustrates an internal configuration of the color measurement apparatus 1, and is a view in which the exterior component of FIG. 2 is removed. On the +Z direction side above a case lower 48, the front frame 44 and the rear frame 45 are disposed to extend in the X-axis direction at an interval, and a gantry frame 26 having a gate shape and composing a portion of the gantry 20 moves in the X-axis direction along the front frame 44 and the rear frame 45.

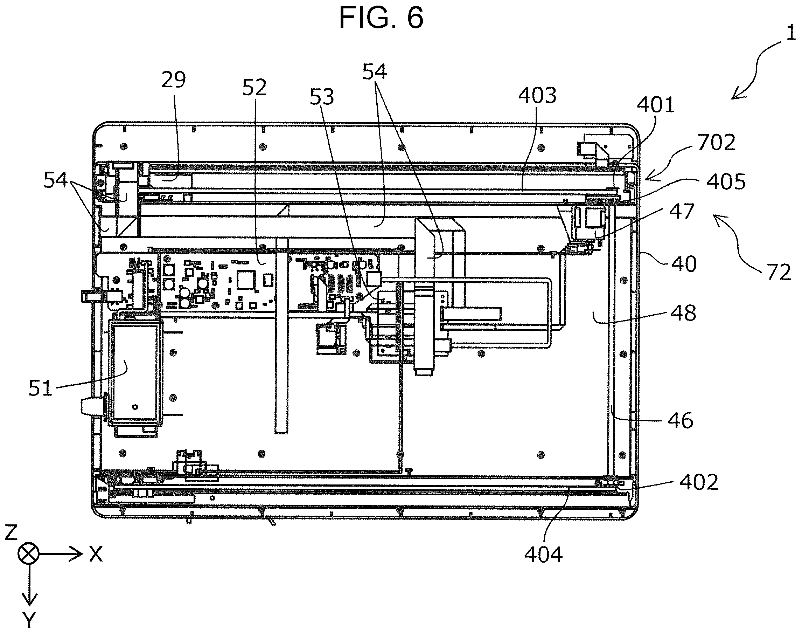

As illustrated in FIG. 5, the front frame 44 and the rear frame 45 are coupled by a coupling shaft 46 at a position on the +X direction side of the main body portion 40, and as illustrated in FIG. 6, the rotational drive of a gantry motor 47 is transmitted from the gantry motor 47, which is a power source for moving the gantry 20 in the X-axis direction, to the coupling shaft 46 via a gear train 405 having a plurality of gears. Here, although the details will be described later, the gear train 405 is composed of a gear 406 provided on the rotation shaft of the gantry motor 47, a gear 407 engaged with the gear 406, and a gear 408 engaged with the gear 407 and provided with a pulley 401. By the rotational drive transmitted to the coupling shaft 46, an endless belt 403 wound around the pulley 401 on the side of the front frame 44 that is the -Y direction side of the coupling shaft 46, and an endless belt 404 wound around a pulley 402 on the side of the rear frame 45 that is the +Y direction side of the coupling shaft 46 are rotated, and the gantry frame 26 coupled to the endless belt 403 is moved.

As illustrated in FIG. 5, a carriage motor 22 is fixed to the front side corresponding to the -Y direction side of the gantry frame 26, and an endless carriage belt 23 hung on a front pulley 24 and a back pulley 25 rotates via the front pulley 24 coupled to the carriage motor 22. A carriage slider 31, which composes a portion of the carriage 30, is fixed to the carriage belt 23, and moves along the Y-axis direction in accordance with the pivoting operation of the carriage belt 23 accompanying the pivoting operation of the carriage motor 22. Inside the main body portion 40, a main substrate 52, a sub-substrate 53, a power supply box 51, or the like as a control portion are provided.

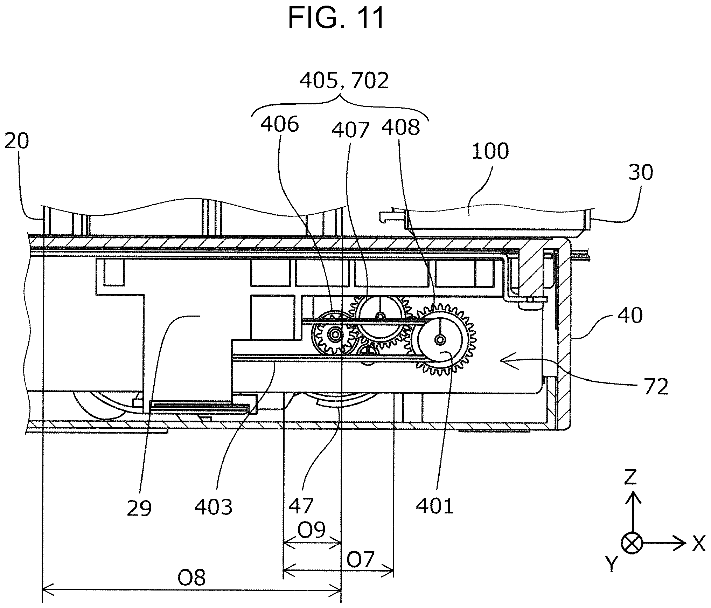

Here, the carriage motor 22, the carriage belt 23, the front pulley 24, the back pulley 25, or the like compose a first scanning mechanism 71 that causes the carriage 30 to perform scanning in the Y-axis direction as the first direction on the support base 41. In addition, as illustrated in FIG. 11, in the gantry motor 47, the gear train 405, the coupling shaft 46, the pulley 401, the endless belt 403, the pulley 402, the endless belt 404, or the like compose a second scanning mechanism 72 that causes the gantry 20 to perform scanning in the X-axis direction as the second direction intersecting the first direction.

In this manner, the color measurement apparatus 1 of the present example is a color measurement apparatus configured to attach the colorimeter 100 that measures the color of the color chart 10, and in other words, is a color measurement apparatus that includes the colorimeter 100 that measures the color of the color chart 10. The support base 41 that supports the color chart 10, the carriage 30 that supports the colorimeter 100, the gantry 20 that supports the carriage 30, the first scanning mechanism 71, and the second scanning mechanism 72 are included. Next, the disposition of the carriage motor 22 and the gantry motor 47 will be described.

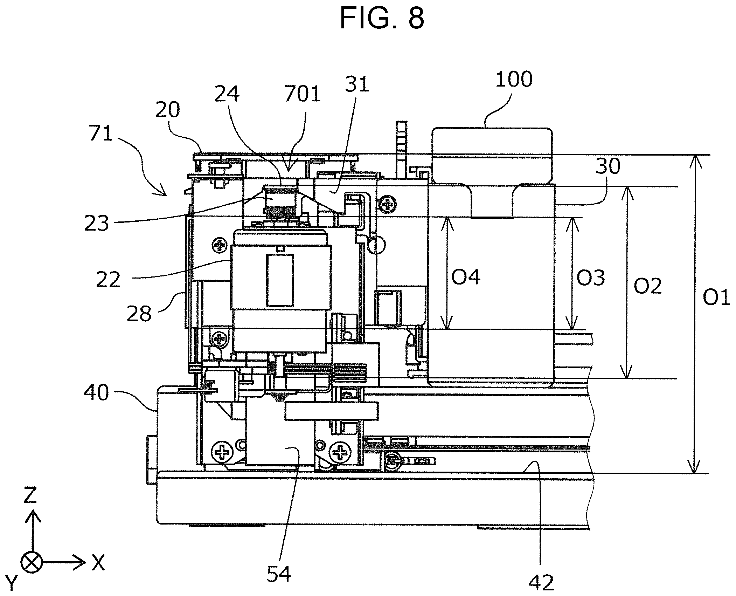

As described above, the first scanning mechanism 71 has the carriage motor 22, the carriage belt 23, the front pulley 24, and the back pulley 25. That is, the first scanning mechanism 71 includes the carriage motor 22 as a first motor that generates a driving force for the scanning of the carriage 30 in the Y-axis direction, and the carriage belt 23, the front pulley 24, and the back pulley 25 as a first transmission mechanism portion 701 that transmits the driving force from the carriage motor 22 to the carriage 30. As illustrated in FIG. 8, the carriage motor 22 is disposed at a position that overlaps, in an overlapping range O2 that is the entire range thereof, with respect to a range 01 of the gantry 20 in the Z-axis direction as a third direction intersecting the Y-axis direction and the X-axis direction. The range 01 of the gantry 20 of the present example indicates a range from the upper end to the lower end of the gantry 20 in the Z-axis direction. In addition, the overlapping range O2 of the present example indicates a range from the upper end to the lower end of the carriage motor 22 in the Z-axis direction. In the present example, the entire range from the upper end to the lower end of the carriage motor 22 is configured to overlap the gantry 20 in the Z-axis direction, but a portion of the range may be configured to overlap the gantry 20.

With such a configuration, in the color measurement apparatus 1 of the present example, the first scanning mechanism 71 can be shortened in the Z-axis direction, and as a result, the color measurement apparatus 1 can be miniaturized. Although the details will be described later, the color measurement apparatus 1 of the present example can move the carriage 30 with respect to the gantry 20 along the Z-axis direction. However, the present disclosure is not limited to this configuration, and a configuration may be adopted in which the carriage 30 can move only in the X-axis direction and the Y-axis direction with respect to the support base 41. In addition, the color measurement apparatus 1 of the present example is configured to attach and detach the colorimeter 100, but is not limited to such a configuration, and the colorimeter 100 may be configured integrally with the color measurement apparatus 1.

Here, as illustrated in FIG. 8 or the like, the rotation shaft of the carriage motor 22 is along the Z-axis direction, and the first transmission mechanism portion 701 includes the front pulley 24 of which the rotation axis is in the Z-axis direction and the carriage belt 23 that is an endless belt that is hung around the front pulley 24 and transmits the driving force of the carriage motor 22. By configuring the first transmission mechanism portion 701 in this way, the first transmission mechanism portion 701 can be configured to be particularly short in the Z-axis direction.

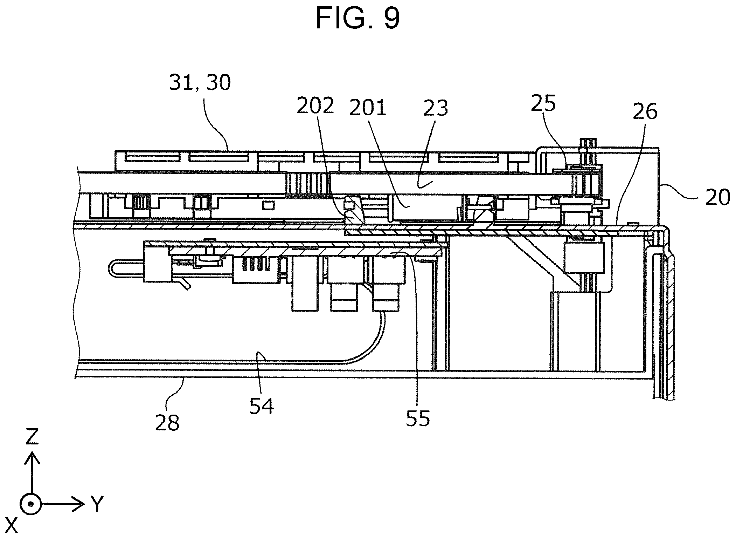

In addition, as illustrated in FIG. 9, the carriage 30 includes an electric substrate 55 coupled to the carriage slider 31. The electric substrate 55 is coupled to the main substrate 52 and the sub-substrate 53 via a flexible flat cable (FFC) 54 that is a harness member, and moves along the Y-axis direction together with the carriage 30 in conjunction with the scanning of the carriage 30 in the Y-axis direction. The FFC 54 is accommodated in a harness member accommodation portion 28 extending in the Y-axis direction in the gantry 20.

Here, as illustrated in FIG. 8, the carriage motor 22 is disposed at a position that overlaps, in an overlapping range 04, with respect to a range O3 of the harness member accommodation portion 28, which is an area in which the FFC 54 is disposed in the Z-axis direction. The range O3 of the present example indicates a range from the upper end to the lower end of the harness member accommodation portion 28 in the Z-axis direction. In the present example, the entire range from the upper end to the lower end of the harness member accommodation portion 28 in the Z-axis direction overlaps the carriage motor 22 in the Z-axis direction, but a portion of the harness member accommodation portion 28 may be configured to overlap at least a portion of the carriage motor 22.

With such a configuration, the color measurement apparatus 1 can be particularly miniaturized in the Z-axis direction.

Furthermore, as illustrated in FIG. 4, the carriage motor 22 is configured to be smaller than the width of the front surface 42 in the Y-axis direction. With such a configuration, the length of the gantry 20 in the Y-axis direction can be suppressed from being increased, and the gantry 20 can be suppressed from protruding from the front surface 42 in the Y-axis direction.

As shown in FIG. 9, the back pulley 25 is provided on a moving sheet metal 202 that is movable along the Y-axis direction with respect to the gantry frame 26. It is configured such that pressure is applied to moving sheet metal 202 in the +Y direction by a belt tension spring 201 and a desired tension is applied to the carriage belt 23 by a spring pressure of the belt tension spring 201. In addition, the color measurement apparatus 1 of the present example does not narrow a movement range of the carriage 30 in the X-axis direction by disposing the belt tension spring 201 on the gantry frame 26.

In addition, as illustrated in FIG. 4 or the like, the color measurement apparatus 1 of the present example includes the power button 42a that is an example of an operation portion that receives an operation instruction from the user, but the power button 42a is provided at a position for overlapping the carriage motor 22 when viewed from the z-axis direction, in other words, at a position for overlapping, in an overlapping range O6, with respect to a range O5 of the carriage motor 22. Specifically, when the gantry 20 performs scanning to the maximum in the +X direction side, the power button 42a reaches to be disposed directly below the carriage motor 22. With such a configuration, the color measurement apparatus 1 can be particularly miniaturized when viewed from the Z-axis direction. The "position for overlapping the carriage motor 22" means a preferable state in which the carriage motor 22 and the power button 42a overlap each other when viewed from the Z-axis direction when the gantry 20 is caused to perform scanning. The range O5 of the example indicates a range occupied by the carriage motor 22 in the Y-axis direction. In addition, the overlapping range O6 of the example indicates a range occupied by the power button 42a in the Y-axis direction.

In addition, in the color measurement apparatus 1 of the present example, the second scanning mechanism 72 illustrated in FIG. 6 is provided in the main body portion 40 having the support base 41. The gantry motor 47 that generates a driving force for displacing the gantry 20 in the X-axis direction and the second transmission mechanism 702 having the endless belt 403 that transmits the driving force from the gantry motor 47 to the gantry 20 are included, and the gantry motor 47 is disposed on the center side of the main body portion 40 with respect to the endless belt 403 when viewed from the Z-axis direction. Accordingly, in the color measurement apparatus 1 of the present example, the gantry motor 47 does not protrude outward in the main body portion 40 when viewed from the Z-axis direction, so that the main body portion 40 can be miniaturized in a view from the Z-axis direction.

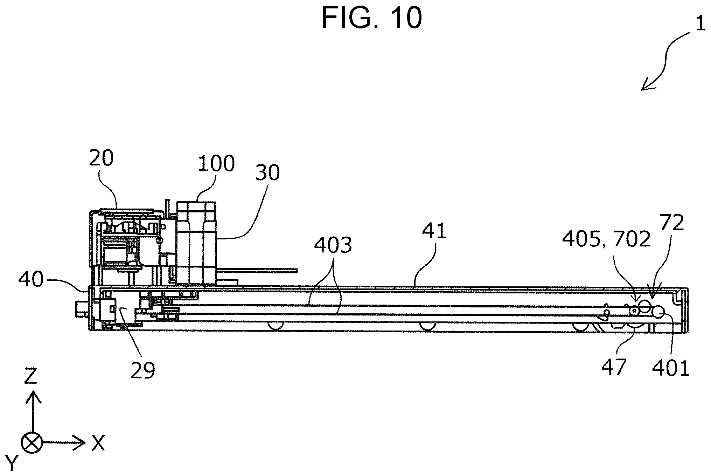

In addition, the gantry motor 47 is provided at a position for overlapping the gantry 20 when viewed from the Z-axis direction. In other words, as illustrated in FIG. 11, the gantry motor 47 is provided such that a range O7 of the gantry motor 47 is at a position for overlapping, in an overlapping range O9, with respect to a range O8 of the gantry 20 when viewed from the Z-axis direction. The range O7 indicates a range from one end to the other end of the gantry motor 47 in the X-axis direction. The range O8 indicates a range from one end to the other end of the gantry 20 in the X-axis direction. In the present example, a portion of the range from one end to the other end of the carriage motor 22 is configured to overlap the gantry 20 in the X-axis direction, but it may be configured such that the entire range of the corresponding range overlaps the gantry 20 in the X-axis direction. Here, FIG. 10 is an overall view of the color measurement apparatus 1 in a state in which the gantry 20 is on the maximum -X direction side with respect to the support base 41, and FIG. 11 is an enlarged view of a state in which the gantry 20 is on the maximum +X direction side with respect to the support base 41. In FIG. 11, the gantry motor 47 overlaps the gantry 20 when viewed from the Z-axis direction. With such a configuration, the color measurement apparatus 1 can be particularly miniaturized when viewed from the Z-axis direction. The "position for overlapping the gantry 20" means a preferable state in which the gantry motor 47 and the gantry 20 overlap each other when viewed from the Z-axis direction when the gantry 20 is caused to perform scanning.

In FIG. 11, the gantry 20 and the gantry motor 47 overlap each other at a position at which the gantry slider 29 of the gantry 20 abuts the main body portion 40 in the +X direction. However, the present disclosure is not limited to such a configuration, and the gantry 20 and the gantry motor 47 may overlap each other at a position other than the position at which the gantry 20 abuts the main body portion 40. For example, the gantry 20 and the gantry motor 47 may be in a disposition to overlap with each other when the gantry 20 is more on the -X direction side as compared with the position at which the gantry 20 abuts the main body portion 40.

Here, in the color measurement apparatus 1 of the present example, the gantry motor 47 and the second transmission mechanism 702 are provided at positions in the Z-axis direction not protruding from the support base 41. With such a configuration, the color measurement apparatus 1 can be particularly miniaturized when viewed from the Z-axis direction.

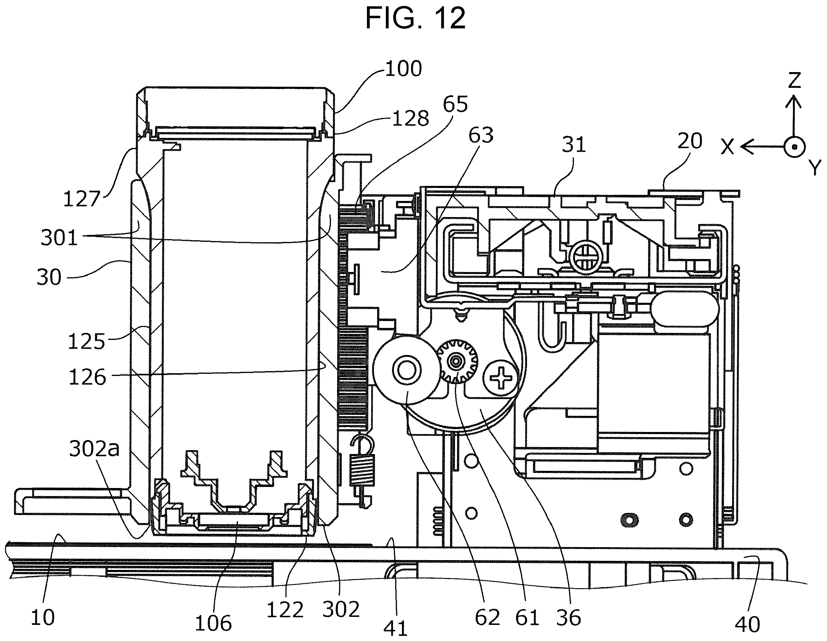

Next, mainly with reference to FIGS. 12 to 16, the position of the carriage 30 in the Z-axis direction with respect to the gantry 20, that is, the position of the carriage 30 and the colorimeter 100 accommodated in the carriage 30 in the Z-axis direction with respect to the measurement target placed on the support base 41 will be described. FIG. 12 is a view illustrating a disposition when the carriage 30 performs scanning in a state in which the colorimeter 100 is accommodated in the carriage 30, that is, when the carriage 30 is moved along the Y-axis direction with respect to the gantry 20. At this time, both the color measurement surface 122 of the colorimeter 100 and a bottom surface 302 of the carriage 30 are in a state in which a gap is vacant in the Z-axis direction with respect to the color chart 10 that is a measurement target.

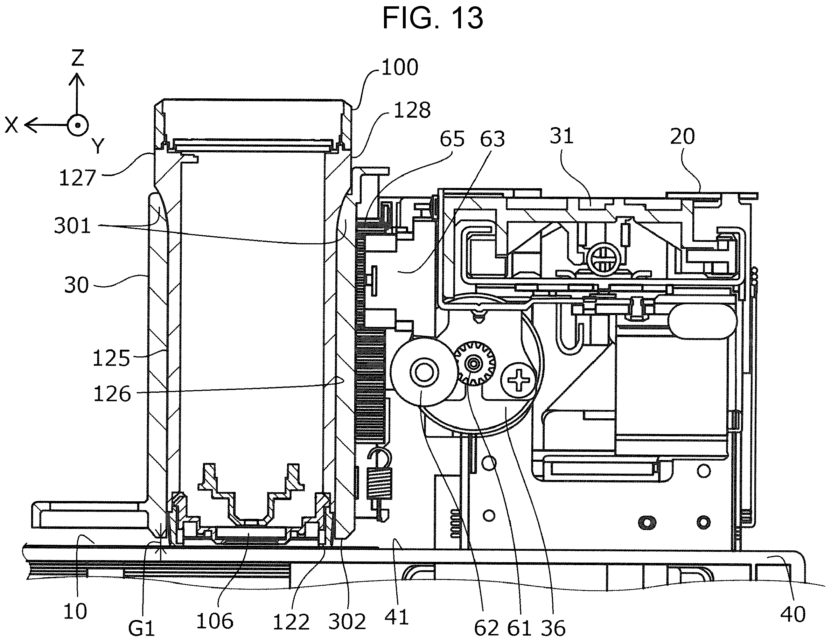

FIG. 13 is a view illustrating a disposition at the moment at which the carriage is moved downward in the -Z direction from the state of FIG. 12 and the color measurement surface 122 of the colorimeter 100 comes into contact with the color chart 10. For example, in the present example, a gap G1 in the Z-axis direction between the bottom surface 302 of the carriage 30 and the color chart 10 at this time is 2 mm. Here, in the present example, the colorimeter 100 is accommodated in the carriage 30 in a state in which the projection portion 127 and the projection portion 128 are caught and placed by their own weight on a rib 301 provided in the carriage 30, and the color measurement surface 122 of the colorimeter 100 is configured to protrude in the -Z direction from a hole portion 302a provided in the bottom surface 302 of the carriage 30.

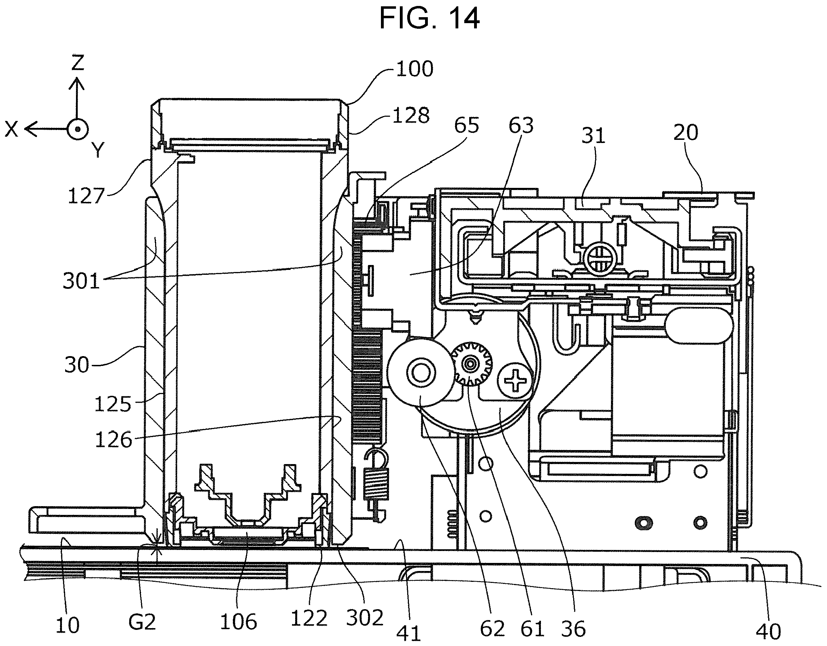

Therefore, as illustrated in FIG. 14, when the carriage 30 is further moved in the -Z direction from the state of FIG. 13, its own weight of the colorimeter 100 is applied to the color measurement surface 122. FIG. 14 illustrates a disposition when the color of the color measurement target is measured, that is, the disposition when the color of the color patch 11 and the black frame 12 of the color chart 10 is measured. For example, in the present example, the gap G2 in the Z-axis direction between the bottom surface 302 of the carriage 30 and the color chart 10 at this time is 1 mm. In other words, in the color measurement apparatus 1 of the present example, when the color of the color measurement target is measured, the color measurement surface 122 is in contact with the color measurement target, but the bottom surface 302 of the carriage 30 is in a state in which a gap is provided.

In the color measurement apparatus 1 of the present example, the color measurement is performed in a state in which the entire periphery of the color measurement surface 122 of the colorimeter 100 viewed from the Z-axis direction comes into contact with the color chart 10 on the support base 41 and follows the surface of the color chart 10. With such a configuration, color measurement can be performed in a state in which the color measurement port 106 that is an optical axis opening of the colorimeter 100 is covered with the color measurement surface 122, so that it is unlikely affected by external light and color measurement accuracy rises. Even in the state of FIG. 13, color measurement can be performed in a state of being unlikely to be affected by external light, but since the carriage 30, the colorimeter 100, and the support base 41 have a tolerance due to manufacturing variations in parts or the like, the holding position of the colorimeter 100 of the carriage 30 or the distance from the color measurement surface 122 to the support base 41 may deviate. However, by further lowering the carriage 30 from the state of FIG. 13, color measurement can be performed without being affected by such a tolerance.

In addition, in a state of FIG. 14, the gap G2 is formed between the bottom surface 302 of the carriage 30 and the color chart 10, and the bottom surface 302 of the carriage 30 and the color chart 10 are in a state of being separated from each other. Therefore, the weight of the carriage 30 is not transmitted to the color chart 10, and it is in a state in which only its own weight of the colorimeter 100 is applied to the color chart 10. Therefore, the colorimeter 100 is in contact with the color chart 10 in a state in which an appropriate load is applied, so that the color chart 10 is unlikely to be damaged.

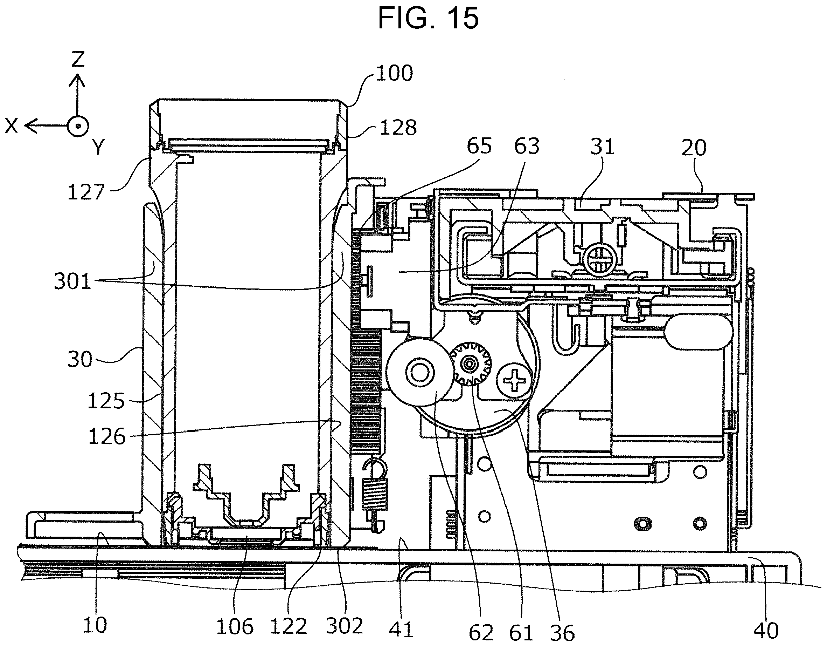

The color measurement apparatus 1 of the present example can measure color of various color measurement targets. The color measurement target that can be color-measured by the color measurement apparatus 1 of the present example has various thicknesses. Therefore, the color measurement apparatus 1 of the present example brings the carriage 30 into contact with the color measurement target by moving the carriage 30 in the Z-axis direction with respect to the color measurement target to be used, and the abutting height, which is the height of the carriage 30 at the contact time, can be measured. Describing from another viewpoint, the abutting height of the carriage 30 is a height of the carriage 30 when the color measurement target is abutted. Specifically, in the color measurement apparatus 1 of the present example, in order to know the abutting height of the carriage 30, by bringing the bottom surface 302 of the carriage 30 in contact with the color measurement target and driving the Z-axis movement direction movement motor 36 to continue lowering the height of the carriage 30 until a threshold value at which the load of the Z-axis movement direction movement motor 36 is present is exceeded, the height exceeding the threshold value is measured, so that the abutting height of the carriage 30 can be known. FIG. 15 is a view illustrating a state when, in order to know the abutting height of the carriage 30, the bottom surface 302 of the carriage 30 abuts the color chart 10 that is a color measurement target and the threshold value at which the load of the Z-axis movement direction movement motor 36 is present is exceeded.

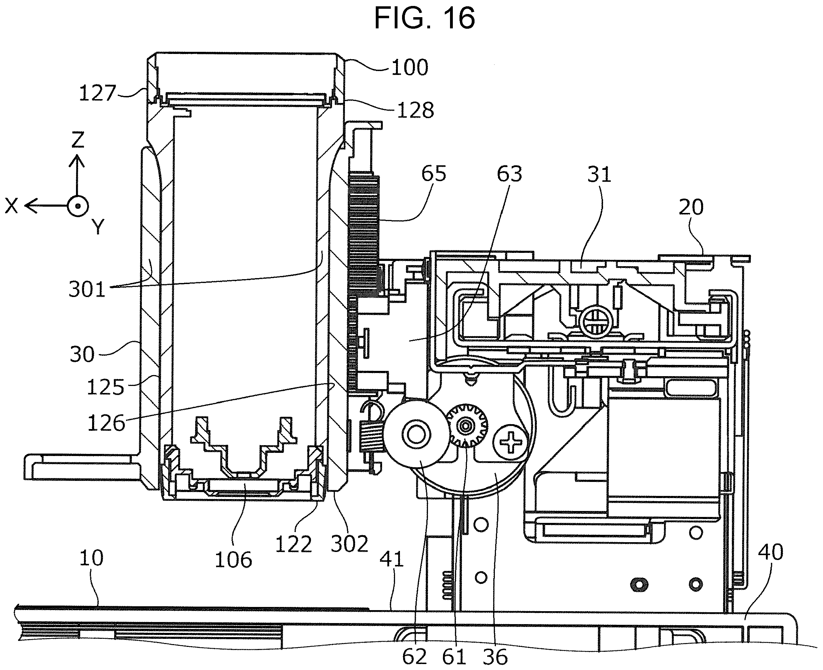

In addition, as described above, the color measurement apparatus 1 of the present example is provided with a home position sensor 39 that measures whether or not the position of the carriage 30 in the Z-axis direction with respect to the gantry 20 is a home position. FIG. 16 illustrates a state in which the carriage 30 is at the home position in the Z-axis direction.

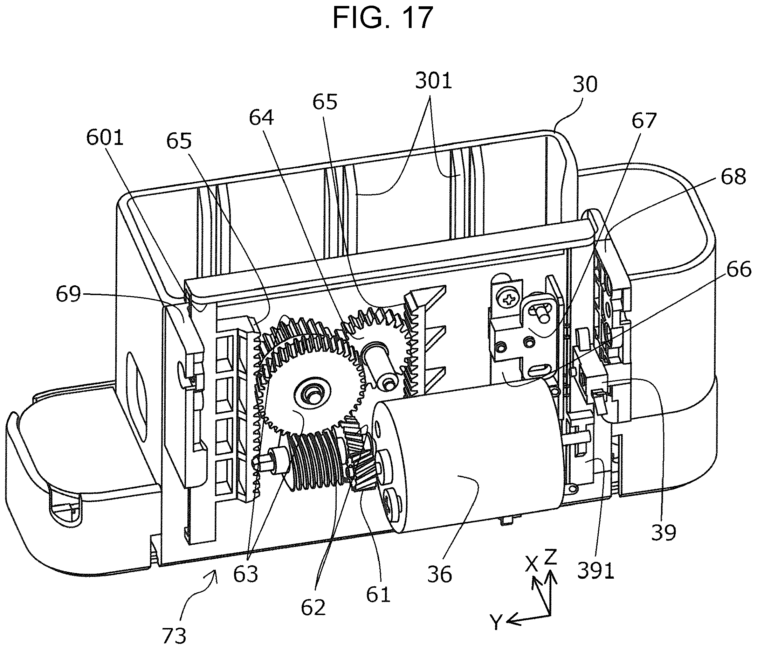

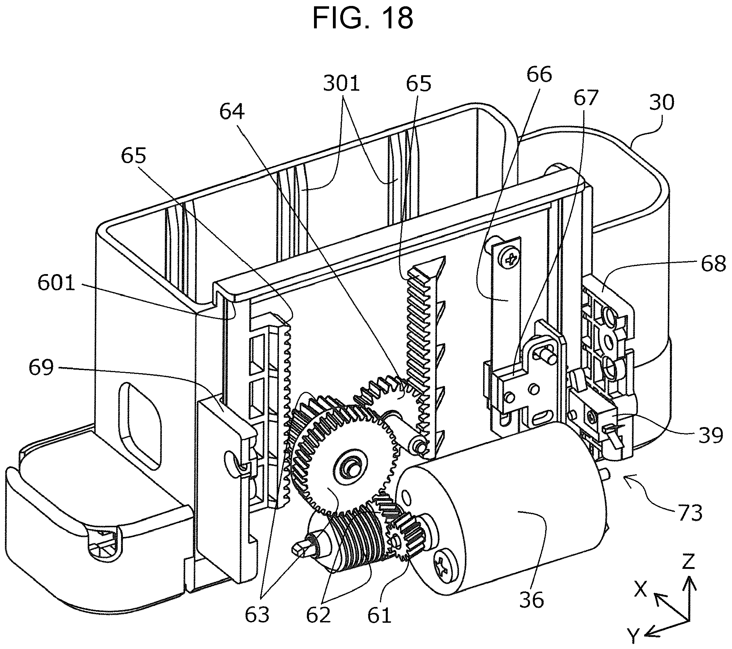

Next, a third direction movement mechanism 73 that moves the carriage 30 in the Z-axis direction with respect to the gantry 20 will be described. FIG. 17 is a perspective view illustrating a periphery of the third direction movement mechanism 73 and is a view illustrating a disposition when the color measurement of the color measurement target is performed, and FIG. 18 is a perspective view illustrating a periphery of the third direction movement mechanism 73 and is a view illustrating a disposition in a state in which the carriage 30 is moved to the home position. The third direction movement mechanism 73 includes the Z-axis movement direction movement motor 36 that is a drive source, a motor gear 61 attached to a rotation shaft of the Z-axis movement direction movement motor 36, a worm gear 62 that is engaged with the motor gear 61, a first driving gear 63 that is engaged with the worm gear 62, a second driving gear 64 that is engaged with the first driving gear 63, and a rack gear 65 that is engaged with the first driving gear 63 and the second driving gear 64. The worm gear 62 can change the rotation direction of the Z-axis movement direction movement motor 36. In addition, the worm gear 62 has a self-locking function of not rotating from the output side in a state in which the Z-axis movement direction movement motor 36 is stopped, so that a lock mechanism that maintains the height of the carriage 30 is not separately required, and the color measurement apparatus 1 can be miniaturized.

In the carriage 30, the power of the Z-axis movement direction movement motor 36, which is a drive source, is transmitted to the motor gear 61, the worm gear 62, the first driving gear 63, and the second driving gear 64 in this order, so that the carriage 30 slidably moves in the Z-axis direction with respect to the gantry 20 via the rack gear 65. In addition, as illustrated in FIGS. 17 and 18, the carriage 30 is provided with a scale encoder 66 and a reading portion 67 of the scale encoder 66. Therefore, the color measurement apparatus 1 of the present example can grasp the position of the carriage 30 in the Z-axis direction with respect to the gantry 20.

Here, a carriage guide front 68 and a carriage guide rear 69 are fixed to the carriage slider 31, and the carriage guide front 68 and the carriage guide rear 69 are set to have the same height. When the height of the carriage 30 is raised, the contact surfaces that are the upper end positions of the carriage guide front 68 and the carriage guide rear 69 come into contact with an abutting portion 601 provided at the upper end position on the side of the carriage 30, and restrict the movement of the carriage 30 in the Z-axis direction. However, the color measurement apparatus 1 of the present example includes the home position sensor 39 and a home position sensor switching portion 391, and the home position sensor 39 is turned on before being restricted at the restriction position of the movement of the carriage 30 in the Z-axis direction, so that it is configured that the driving in the rising direction by the Z-axis movement direction movement motor 36 is stopped. In the color measurement apparatus 1 of the present example, the home position is set to a height at which the carriage 30 normally stands by.

The lower limit side of the height of the carriage 30 is composed of an abutting portion and a contact portion as in the upper limit side, but since the carriage 30 is structured to come into contact with the color chart 10, the driving in the downward direction is configured to be stopped when the carriage 30 comes into contact with the color chart 10. In addition, as illustrated in FIGS. 17 and 18, the rack gear 65 is composed by two on the front side and the rear side. The phases of the gears are the same as each other. In this manner, by providing the rack gear 65 and two pairs of gears engaged with the rack gear 65 composed of the first driving gear 63 and the second driving gear 64, the inclination of the carriage 30 is suppressed, and the accuracy is improved when the carriage 30 is moved.

In addition, as described above, the color measurement apparatus 1 of the present example is provided with the scale encoder 66 and the reading portion 67. Specifically, the height of the carriage 30 can be accurately grasped by combining the transmissive optical reading portion 67 and the semi-transparent strip-shaped scale encoder 66 composed of a black and white pattern. In addition, the disposition space is smaller than when the rotary encoder is used. The Z-axis movement direction movement motor 36 of the present example is a DC motor. Therefore, for example, the component can be miniaturized and the weight can be reduced as compared with using the stepping motor.

As described above, the color measurement apparatus 1 of the present example includes the third direction movement mechanism 73 that moves the carriage 30 in the Z-axis direction with respect to the gantry 20, and the third direction movement mechanism 73 has the Z-axis movement direction movement motor 36, which is a third motor that generates a driving force for moving the carriage 30 in the Z-axis direction, at the carriage 30. In this manner, the carriage 30 has the Z-axis movement direction movement motor 36, so that the gantry 20 can be miniaturized.

In addition, as described above, the third direction movement mechanism 73 has the plurality of gears that transmit the driving force of the Z-axis movement direction movement motor 36, and includes the worm gear 62 as these gears. With such a configuration, the color measurement apparatus 1 of the present example can miniaturize the third direction movement mechanism 73.

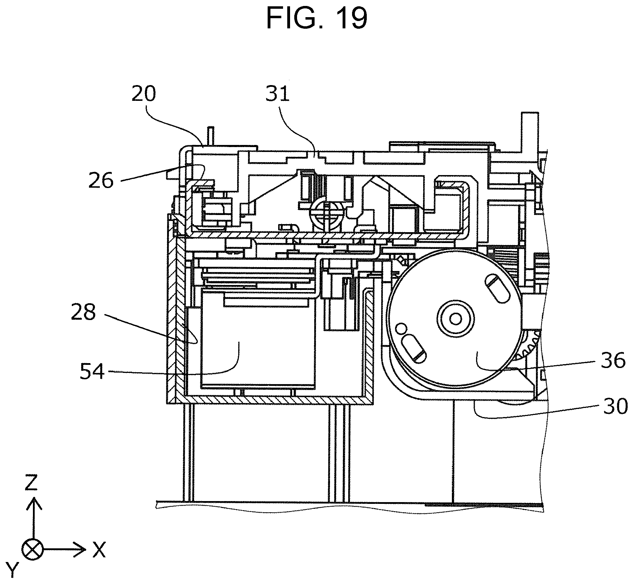

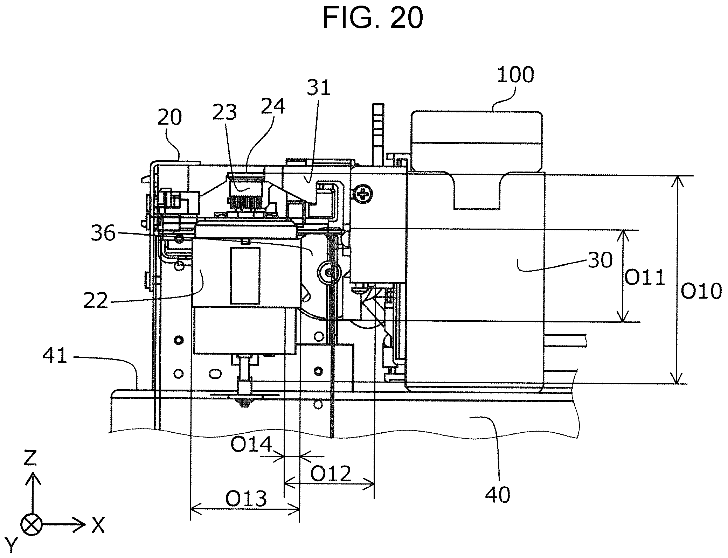

Next, the disposition of the Z-axis movement direction movement motor 36 will be described. FIG. 19 is a front view of a periphery of the carriage 30 and is a view illustrating the internal configuration of the gantry 20 and the carriage 30, and FIG. 20 is a front view of a periphery of the carriage 30 and is a view illustrating a configuration member different from those in FIGS. 8 and 18 in the internal configuration of the gantry 20. In the color measurement apparatus 1 of the present example, as illustrated in FIG. 20, the Z-axis movement direction movement motor 36 is provided at a position that overlaps, in an overlapping range O11 that is the entire range thereof, with respect to a range O10 of the carriage motor 22 in the Z-axis direction when viewed from the Y-axis direction. The range O10 of the present example indicates a range from the upper end to the lower end of the carriage motor 22 in the Z-axis direction. The overlapping range O11 of the present example indicates a range from the upper end to the lower end of the Z-axis movement direction movement motor 36 in the Z-axis direction. In the present example, the entire range from the upper end to the lower end of the Z-axis movement direction movement motor 36 in the Z-axis direction is configured to overlap the carriage motor 22 in the Z-axis direction, but a portion of the range may be configured to overlap the carriage motor 22. With such a configuration, the color measurement apparatus 1 can be particularly miniaturized in the Z-axis direction.

In addition, as illustrated in FIG. 20, when viewed from the Y-axis direction, a portion of the Z-axis movement direction movement motor 36 can be seen to overlap with a portion of the carriage motor 22. That is, the Z-axis movement direction movement motor 36 is provided at a position that overlaps the carriage motor 22 in the X-axis direction. In other words, as illustrated in FIG. 20, the Z-axis movement direction movement motor 36 is provided at a position at which a range 012 of the Z-axis movement direction movement motor 36 can overlap, in an overlapping range 014, with respect to a range 013 of the carriage motor 22 in the X-axis direction. The range O12 of the present example indicates a range from one end to the other end of the Z-axis movement direction movement motor 36 in the X-axis direction. The overlapping range 013 of the present example indicates a range from one end to the other end of the carriage motor 22 in the X-axis direction. In the present example, a portion of the range from one end to the other end of the Z-axis movement direction movement motor 36 in the X-axis direction is configured to overlap the carriage motor 22 in the X-axis direction, but the entire range may be configured to overlap the carriage motor 22. With such a configuration, the gantry 20 and the carriage 30 can be miniaturized in the X-axis direction, and as a result, the color measurement apparatus 1 can be particularly miniaturized in the X-axis direction.

In addition, as illustrated in FIG. 19, in the color measurement apparatus 1 of the present example, the Z-axis movement direction movement motor 36 and the FFC 54 are disposed on the lower portion of the gantry frame 26. With such a configuration, the color measurement apparatus 1 can be particularly miniaturized in the Z-axis direction.

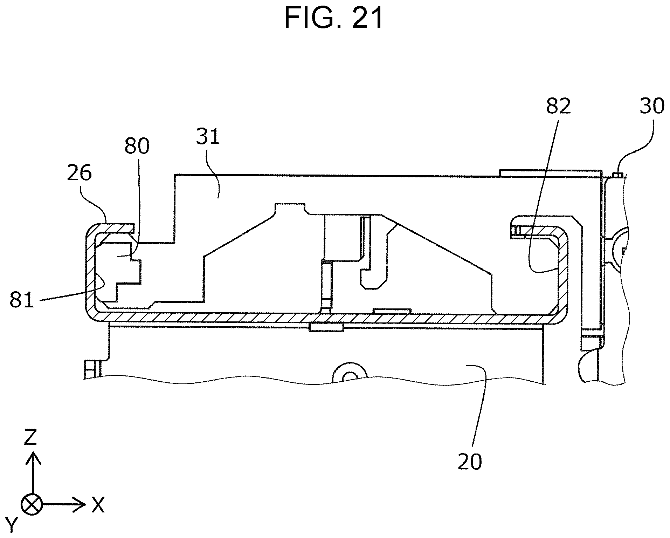

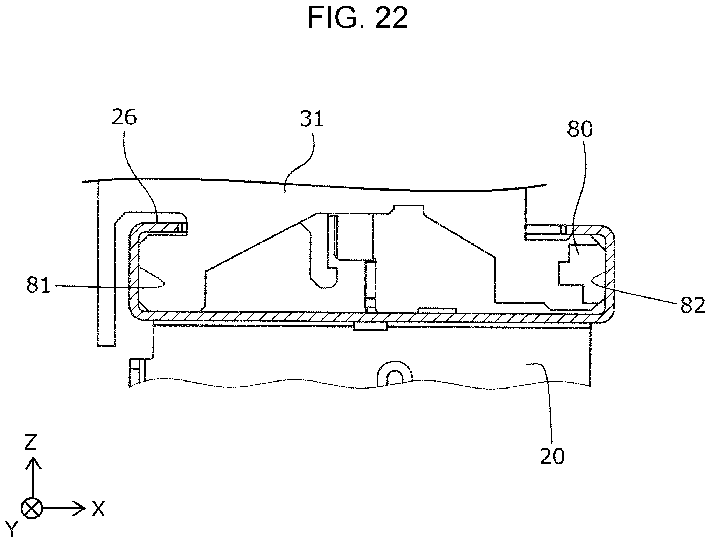

Next, the sliding surfaces of the carriage slider 31 and the gantry frame 26 will be described. FIG. 21 is a front sectional view of a periphery of the carriage slider 31 and the gantry frame 26 of the color measurement apparatus 1 according to the present example, and FIG. 22 is front sectional view of a periphery of the carriage slider 31 and the gantry frame 26 of the color measurement apparatus 1 according to another example. As illustrated in FIG. 21, the color measurement apparatus 1 of the present example is provided with an elastic member 80 at an end portion of the carriage slider 31 on the -X direction side. The elastic member 80 presses the carriage slider 31 against a +X direction side surface 82 of the gantry frame 26.

In addition, in the color measurement apparatus 1 according to the present example, the +X direction side surface 82 of the gantry frame 26, which is a sliding surface with respect to the carriage slider 31, is coated with a lubricating agent. In addition, the lubricating agent is also applied to a -X direction side surface 81 of the gantry frame 26, which is a sliding surface that slides with the elastic member 80. With such a configuration, the slidability of the carriage slider 31 and the gantry frame 26 is enhanced. The color measurement apparatus 1 of the present example is also configured to suppress the user from touching the lubricating agent since both the -X direction side surface 81 and the +X direction side surface 82 correspond to the inside of the gantry frame 26.

Although not illustrated in FIG. 22, in the color measurement apparatus illustrated in FIG. 22, similar to the color measurement apparatus 1 of the present example, the accommodation portion of the colorimeter 100 in the carriage 30 is provided on the +X direction side of the carriage slider 31. In the color measurement apparatus illustrated in FIG. 22, the elastic member 80 is disposed at the end portion of the carriage slider 31 on the +X direction side. Therefore, the elastic member 80 presses the carriage slider 31 against the -X direction side surface 81 of the gantry frame 26. In the case of a configuration in which the accommodation portion of the colorimeter 100 is provided on the +X direction side, a force is likely to be applied in the -X direction during color measurement, but with such a configuration, the carriage slider 31 is securely pressed by the -X direction side surface 81, so that the rattling of the carriage 30 can be reduced during color measurement. Even in such a configuration, it is preferable that the lubricating agent is applied to the -X direction side surface 81 and the +X direction side surface 82.

The present disclosure is not limited to the above-described examples, and can be realized in various configurations without departing from the gist of the present disclosure. For example, technical features in the examples corresponding to technical features in each form described in a column of the outline of the disclosure can be appropriately replaced or combined to partially or entirely solve the above-described problems, or to partially or entirely achieve the above-described advantageous effects. In addition, unless the technical features are described as essential in the present specification, deletion is possible as appropriate.

## Claims

1. A color measurement apparatus to which a colorimeter that measures a color of a color measurement target is configured to be attached, the color measurement apparatus comprising:
a support base that supports the color measurement target;
a carriage that supports the colorimeter;
a gantry that supports the carriage;
a first scanning mechanism that causes the carriage to perform scanning in a first direction on the support base; and
a second scanning mechanism that causes the gantry to perform scanning in a second direction intersecting the first direction, wherein
the first scanning mechanism includes a first motor that generates a driving force for causing the carriage to perform scanning in the first direction, and a first transmission mechanism portion that transmits the driving force from the first motor to the carriage, and the first motor overlaps the gantry in a third direction intersecting the first direction and the second direction.

2. The color measurement apparatus according to claim 1, further comprising:
an electric substrate that is provided on the carriage and moves in conjunction with the carriage; and
a harness member that is disposed along the first direction in the gantry and is coupled to the electric substrate, wherein
the first motor overlaps an area in which the harness member is disposed in the third direction.

3. The color measurement apparatus according to claim 1, wherein
a rotation shaft of the first motor is along the third direction, and
the first transmission mechanism portion includes a pulley of which a rotation axis is in the third direction, and an endless belt that is hung on the pulley and transmits the driving force.

4. The color measurement apparatus according to claim 1, wherein
the second scanning mechanism includes a second motor that generates a driving force for displacing the gantry in the second direction in a main body portion having the support base, and a second transmission mechanism having a belt that transmits the driving force from the second motor to the gantry, and
the second motor is provided on a center side of the main body portion with respect to the belt when viewed from the third direction.

5. The color measurement apparatus according to claim 4, wherein
the second motor is provided at a position for overlapping the gantry when viewed from the third direction.

6. The color measurement apparatus according to claim 5, wherein
the second motor and the second transmission mechanism are provided at positions not protruding from the support base in the third direction.

7. The color measurement apparatus according to any one of claims 1 to 6, further comprising:
an operation portion that receives an operation instruction, wherein
the operation portion is provided at a position for overlapping the first motor when viewed from the third direction.

8. The color measurement apparatus according to any one of claims 1 to 6, further comprising:
a third direction movement mechanism that moves the carriage in the third direction with respect to the gantry, wherein
the third direction movement mechanism has a third motor, which generates a driving force for moving the carriage in the third direction, in the carriage.

9. The color measurement apparatus according to claim 8, wherein
the third motor is provided at a position overlapping the first motor in the third direction.

10. The color measurement apparatus according to claim 9, wherein
the third motor is provided at a position overlapping the first motor in the second direction.

11. The color measurement apparatus according to claim 8, wherein
the third direction movement mechanism has a plurality of gears that transmit the driving force of the third motor, and
the gears include a worm gear.

12. The color measurement apparatus according to any one of claims 1 to 11, wherein the second scanning mechanism includes a second motor that generates a driving force for displacing the gantry in the second direction in a main body portion having the support base, and a second transmission mechanism that has a belt that transmits the driving force from the second motor to the gantry, and
the second motor is provided on a center side of the main body portion with respect to the belt when viewed from a third direction intersecting the first direction and the second direction.
